# EUROPÄISCHE PATENTANMELDUNG

(11) **EP 1 408 274 A2**
(43) Veröffentlichungstag der Anmeldung: **14.04.2004**
(21) Anmeldenummer: 03020511.6
(22) Anmeldetag: 16.09.2003
(51) Int. Cl.: F17C 3/08, F17C 1/06

(54) **Druckbehälter für kondensierte Gase, insbesondere Kryotank für ein Kraftfahrzeug**

(30) Priorität: 11.10.2002 DE 10247504
(71) Anmelder: Bayerische Motoren Werke Aktiengesellschaft, 80809 München (DE)
(72) Erfinder: Bauer, Michael, 85114 Buxheim (DE); Koppi, Johannes, 80993 München (DE)

(57) **Zusammenfassung**

Die Erfindung betrifft einen Druckbehälter für kondensierte Gase, insbesondere einen Kryotank für ein Kraftfahrzeug, bestehend aus einem Innenbehälter (2) sowie einem diesen unter Bildung eines evakuierten Zwischenraumes umgebenden Außenbehälter (1), wobei der Außenbehälter (1) und/oder der Innenbehälter (2) aus zumindest einer, vorzugsweise mehreren Lage(n) (a - f) von Faserverbundmaterial (12, 22) aufgebaut ist. Bevorzugt ist die Ausrichtung der Fasern des Faserverbundmaterials (12, 22) in den einzelnen Lagen (a, b, ...) in verschiedenen Abschnitten des jeweiligen Behälters (1, 2) unterschiedlich, wobei der der Außenbehälter (1) zusätzlich eine oder mehrere aus einem Metall (11) bestehende Lage(n) (a -c) aufweisen kann. Innerhalb des aus Faserverbundmaterial (22) aufgebauten Innenbehälters (2) ist bevorzugt eine zusammenhängende Diffusionssperrschicht (23) vorgesehen, die unter Druckbelastung an der Innenwand des Innenbehälters (2) anliegt, jedoch gegenüber dieser verschiebbar ist, wobei die Diffusionssperrschicht (23) durch eine mit einem geeigneten Sperrmaterial (23b) beschichtete Trägerschicht (23a) gebildet ist.

## Beschreibung

Die Erfindung betrifft einen Druckbehälter für kondensierte Gase, insbesondere einen Kryotank für ein Kraftfahrzeug, bestehend aus einem Innenbehälter sowie einem diesen unter Bildung eines evakuierten Zwischenraumes umgebenden Außenbehälter.. Zum technischen Umfeld wird beispielshalber auf die DE 197 11 844 A1, auf die DE 198 17 324 A1, sowie auf die DE 195 44 593 C2 verwiesen.

Druckbehälter für kondensierte Gase und insbesondere Kryotanks für Kraftfahrzeuge, in denen ein unter Umgebungsbedingungen gasförmiger Kraftstoff tiefkalt und somit im im wesentlichen flüssigen Aggregatzustand gespeichert wird, bedürfen einer extrem guten Isolation, um einen unerwünschten Wärmeeinfall in das kryogen gespeicherte Medium so weit als möglich zu verhindern. Zur Sicherstellung einer solchen Isolationswirkung bestehen diese Druckbehälter aus einem Außenbehälter und einem innerhalb dessen angeordneten Innenbehälter, der das kryogen gespeicherte Medium aufnimmt, wobei zwischen diesen beiden Behältern eine hochwirksame Isolationshülle vorgesehen ist, die durch ein unter den jeweiligen Umständen realisierbares Vakuum gebildet ist. Üblicherweise sind diese beiden Behälter aus Stahl gefertigt, wobei es insbesondere bei strukturangepassten Behältern notwendig sein kann, das isotrope StahlMaterial mit Hilfe von Rippen, Sicken o. ä in eine oder mehrere Richtungen zu versteifen.

Bei üblicher Bauweise ergibt sich nicht nur wegen der Verwendung von Stahlmaterial, sondern auch wegen der genannten Versteifungen eine relativ hohe Masse für den Druckbehälter, was insbesondere für den Einsatzfall eines solchen Kryotanks in Kraftfahrzeugen einen großen Nachteil darstellt. Aus Festigkeitsgründen werden ferner relativ hohe Wandstärken benötigt, was den erforderlichen Bauraum vergrößert bzw. bei beschränktem Bauraum (wie im Kfz) das betankbare Treibstoffvolumen begrenzt bzw. reduziert.

Zur Behebung dieser Nachteile wird hiermit der Einsatz von Behältern aus Faserverbundkunststoffen zur Speicherung von Flüssigwasserstoff vorgeschlagen, d.h. zur Lösung der geschilderten Problematik wird vorgeschlagen, den Außenbehälter und/oder den Innenbehälter aus zumindest einer, vorzugsweise mehreren Lage(n) von Faserverbundmaterial aufzubauen. Dieses zeichnet sich nämlich durch geringes Gewicht aus. Insbesondere im Falle einer Mehrlagigkeit, d.h. bei mehreren Lagen von Faserverbundmaterial und unterschiedlicher Ausrichtung der Fasern des Faserverbundmaterials in den einzelnen Lagen ergibt sich dabei eine höchstmögliche Festigkeit. Wenn dabei die Ausrichtung der Fasern des Faserverbundmaterials in den einzelnen Lagen und in verschiedenen Abschnitten des jeweiligen Behälters unterschiedlich und den jeweiligen mechanischen Anforderungen entsprechend gewählt ist, so kann somit bewusst die Orthotropie ausgenutzt werden, um in den verschiedenen Richtungen bestimmte Steifigkeits- bzw. Festigkeitswerte zu erzielen.

Um den Außenbehälter möglichst resistent gegen Feuer und andere Gewalteinwirkungen (von außen) gestalten und dennoch relativ leicht bauend ausführen zu können, wird für diesen der Einsatz von faserverstärktem Material, also Faserverbundmaterial, zusammen mit bspw. dünnen Blechen aus Metall und bevorzugt Leichtmetall, bspw. aus Aluminium (bspw. ARALL, GLARE) vorgeschlagen, da damit der Schutz gegen Feuer und Beschädigungen erhöht werden und die Masse bzw. das Gewicht gering gehalten werden kann. Dabei ist der Außenbehälter quasi schichtweise aufgebaut, d.h. es sind - wie bei der Verwendung von Faserverbundmaterialien an sich üblich - mehrere Lagen des Faserverbundwerkstoffes vorgesehen, wobei erfindungsgemäß nun zumindest eine Lage eines metallischen Werkstoffes zwischen zwei Schichten von Faserverbundmaterial vorgesehen ist. Diese "metallische Lage" kann bevorzugt durch ein Blech gebildet werden, welches im Hinblick auf das Ziel der Gewichtsreduzierung aus einem Leichtmetall besteht. Selbstverständlich können abwechselnd mehrere Lagen von Faserverbundmaterial und Leichtmetall(-blech) vorgesehen sein.

Um am Innenbehälter eine Durchlässigkeit des Kunststoffes bzw. Faserverbundwerkstoffes für das im Innenbehälter kryogen gespeicherte Medium, bspw. Wasserstoff, auszuschließen, empfiehlt es sich, eine sog. Diffusionssperre vorzusehen. Dabei hat sich herausgestellt, dass direkt auf ein Faserverbundmaterial aufgebrachte Diffusionssperren aufgrund der nicht zu vermeidenden Temperaturspannungen und der Druckbeanspruchung im Laufe der Zeit undicht werden. Als Abhilfemaßnahme wird nun eine zusammenhängende Diffusionssperrschicht vorgeschlagen, die unter Druckbelastung an der Innenwand des Innenbehälters anliegt, jedoch gegenüber dieser verschiebbar ist. Am bzw. im Innenbehälter ist dann neben der eigentlichen tragenden und aus Faserverbundmaterial bestehenden Struktur zusätzlich eine konstruktiv von dieser getrennte sog. Diffusionssperre vorgesehen, um jegliche Undichtigkeit zu vermeiden. Am Innenbehälter werden dann alle mechanischen und thermischen Lasten von der tragenden Struktur aufgenommen, während die zusätzliche, relativ dünne und somit elastische Diffusionssperre spannungsfrei von innen her an dieser tragenden Struktur anliegen kann, mit dieser jedoch nicht fest verbunden ist. Bevorzugt besteht diese Diffusionssperre aus einer dünnen Trägerschicht (aus einem metallischen oder einem nicht metallischen Werkstoff) und einer sog. Diffusionssperrschicht, die ebenfalls durch ein Metall oder ein Nichtmetall gebildet sein kann. Bei einer Druckbelastung legt sich diese Diffusionssperre zwar an die tragende Struktur oder Hülle des Innenbehälters an, kann sich aber trotzdem gegenüber dieser noch verschieben. Zur Herstellung der Diffusionssperre kann die Trägerschicht bspw. galvanisch beschichtet werden. Somit kann sichergestellt werden, dass die Behälteranschlüsse ebenfalls diffusionsdicht sind.

Ein bevorzugtes Ausführungsbeispiel der Erfindung ist auf das wesentliche abstrahiert in den beigefügten Figuren dargestellt und wird im folgenden näher beschrieben. **Figur 1** zeigt dabei eine Ansicht des Außenbehälters eines Kryo-Kraftstofftanks eines Kraftfahrzeugs mit einer symbolhaften Explosionsdarstellung eines Ausschnitts der Behälterwand, während in **Figur 2** der Lagenaufbau in verschiedenen Bereichen des Innenbehälters in gleicher' Weise dargestellt ist. **Figur 3** schließlich zeigt einen Querschnitt durch den Innenbehälter mit einer Diffusionssperre, die sich an die Innenwand der tragenden Struktur anlegen kann.

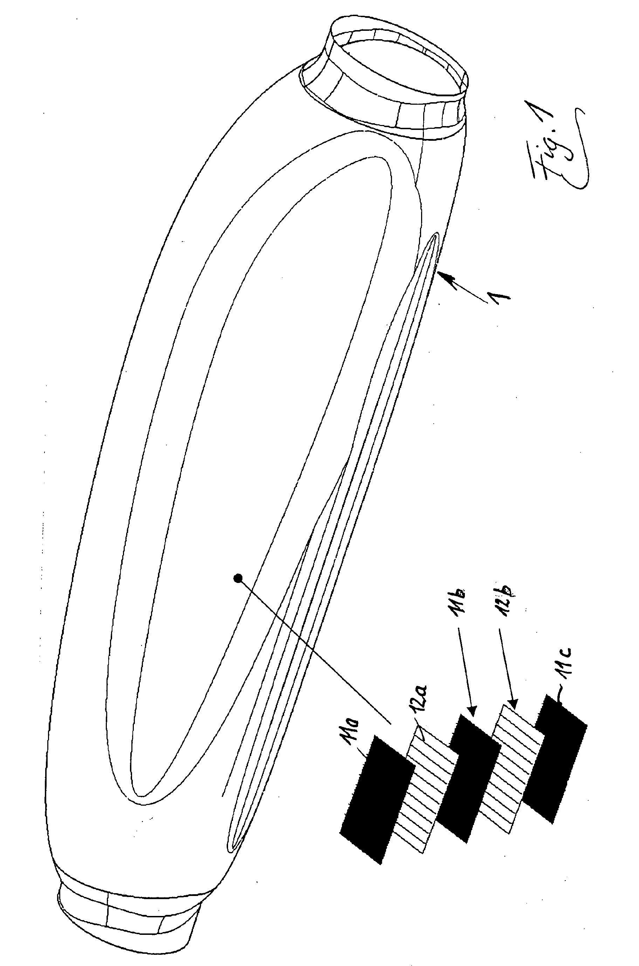

Zunächst auf **Figur 1** Bezug nehmend ist räumlich die Außenansicht eines hier zigarrenförmigen Außenbehälters 1 dargestellt, der Bestandteil eines Kryo-Kraftstofftanks eines Kraftfahrzeugs ist. Die Wand dieses Außenbehälters 1 besteht wie im Detail dargestellt aus mehreren übereinander oder aufeinander vorgesehenen Lagen 11a, 12a, 11 b, 12b, 11 c, wobei abwechselnd ein Faserverbundmaterial 12 (= faserverstärkter Kunststoff) und ein Metallblech 11 (insbesondere aus einer Aluminium-Legierung) vorgesehen oder geschichtet ist. Die für die Faserverbundmaterial-Schichten 12a und 12b dargestellten Linien geben dabei die beanspruchungsgerechte Ausrichtung der Fasern bei einem erfindungsgemäßen strukturangepassten Kryotank wieder. An einer anderen Stelle dieses Außenbehälters 1 können die Fasern innerhalb der jeweiligen Faserverbundmaterial-Schicht 12 anders orientiert sein.

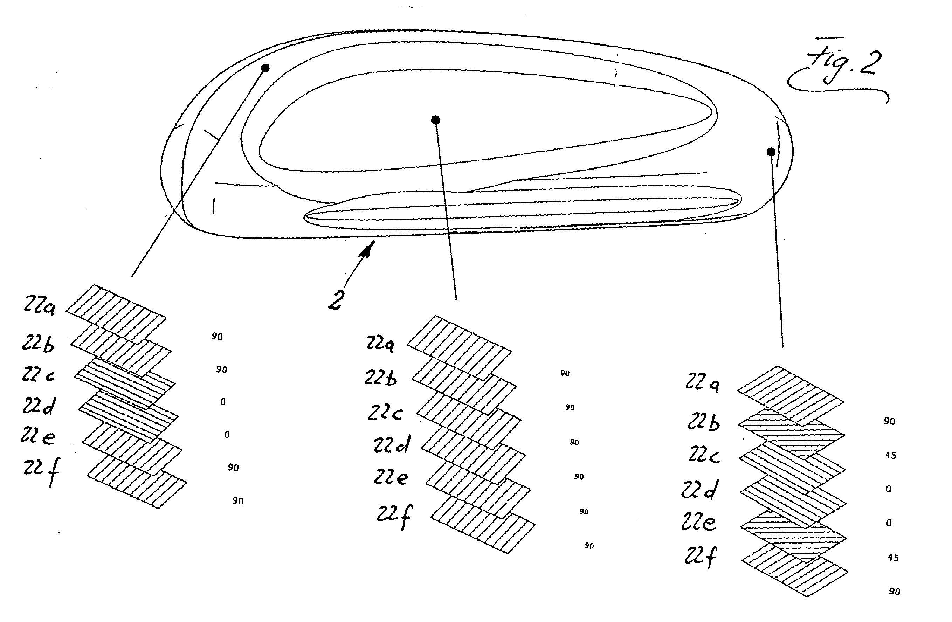

Innerhalb dieses Außenbehälters 1 befindet sich - wie üblich - ein Innenbehälter 2, dessen Außenansicht in **Figur 2** räumlich dargestellt ist. Die Wand bzw. tragende Struktur dieses Innenbehälters 2 ist abermals aus mehreren Lagen bzw. Schichten aufgebaut, wobei hier lediglich ein Faserverbundwerkstoff 22 zum Einsatz kommt. Hier sind die insgesamt 6 Schichten mit den Bezugsziffern 22a - 22f wie in **Fig.1** dargestellt, d.h. es ist durch die Linien die Ausrichtung der Fasern wiedergegeben, wobei die Angabe "0°" für die Längsrichtung des Behälters 2 und die Angabe "90°" für dessen Umfangsrichtung steht. Wie ersichtlich ist die Ausrichtung der Fasern in den einzelnen Lagen oder Schichten a - f an verschiedenen Abschnitten des Behälters 2 unterschiedlich, und zwar im Hinblick auf die auftretenden Belastungen, d.h. es handelt sich hier abermals um einen strukturangepassten Kryotank.

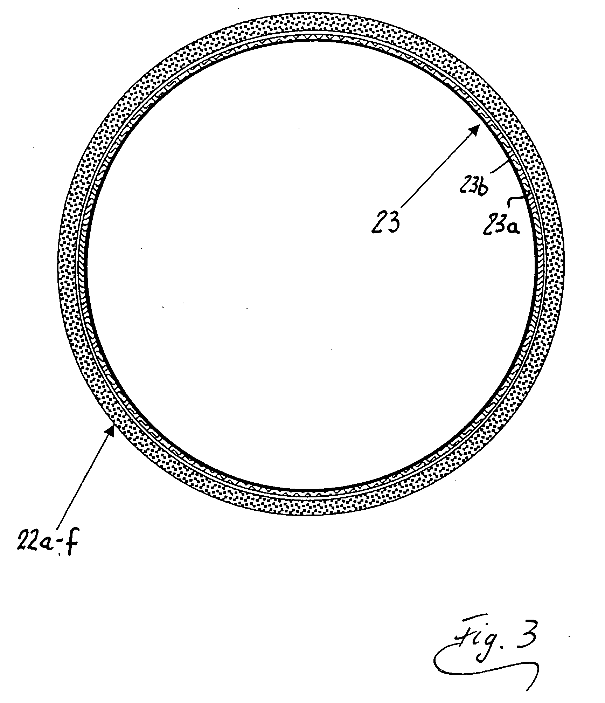

Ein Querschnitt durch den Innenbehälter 2 ist in **Figur 3** dargestellt. Dabei ist die tragende Struktur der Behälterwand durch die Schichten 22a - 22f aus faserverstärktem Kunststoff gebildet. Innerhalb dieser tragenden Struktur und somit im Innenraum dieses Behälters 2 ist eine sog. Diffusionssperre 23 vorgesehen, die durch eine bevorzugt dünne Trägerschicht 23a (aus einem metallischen oder einem nicht metallischen Werkstoff) gebildet wird, auf der sich eine Diffusionssperrschicht 23b befindet, die ebenfalls durch ein Metall oder ein Nichtmetall gebildet sein kann. Bei einer Druckbelastung legt sich diese Diffusionssperre 23 zwar an die tragende Struktur 22a - 22f oder Hülle des Innenbehälters 2 an, kann sich aber trotzdem gegenüber diesem bzw dieser noch verschieben. Zur Herstellung dieser Diffusionssperre 23 kann die Trägerschicht 23a bspw. galvanisch mit einem die Diffusionssperrschicht 23b bildenden Sperrmaterial beschichtet werden.

Ein erfindungsgemäßer Druckbehälter erlaubt auch den Einsatz von Faserverbundkunststoff in der Speicherung von Flüssigwasserstoff und zeichnet sich somit durch niedriges Gewicht, geringen Bauraumbedarf und geringen Fertigungsaufwand und somit niedrige Herstellkosten aus. Gleichzeitig ist die erforderliche Feuerresistenz gewährleistet, wobei noch darauf hingewiesen sei, dass durchaus eine Vielzahl von Details insbesondere konstruktiver Art abweichend vom gezeigten Ausführungsbeispiel gestaltet sein kann, ohne den Inhalt der Patentansprüche zu verlassen.

## Patentansprüche

1. Druckbehälter für kondensierte Gase, insbesondere Kryotank für ein Kraftfahrzeug, bestehend aus einem Innenbehälter (2) sowie einem diesen unter Bildung eines evakuierten Zwischenraumes umgebenden Außenbehälter (1), wobei der Außenbehälter (1) und/oder der Innenbehälter (2) aus zumindest einer, vorzugsweise mehreren Lage(n) (a - f) von Faserverbundmaterial (12, 22) aufgebaut ist.

2. Druckbehälter nach Anspruch 1,
**dadurch gekennzeichnet, dass** die Ausrichtung der Fasern des Faserverbundmaterials (12, 22) in den einzelnen Lagen (a, b, ...) in verschiedenen Abschnitten des jeweiligen Behälters (1, 2) unterschiedlich ist.

3. Druckbehälter nach Anspruch 1 oder 2,
**dadurch gekennzeichnet, dass** der Außenbehälter (1) zusätzlich eine oder mehrere aus einem Metall (11), insbesondere Leichtmetall, bestehende Lage(n) (a -c) aufweist.

4. Druckbehälter nach einem der Ansprüche 1 - 3,
**dadurch gekennzeichnet, dass** innerhalb des aus Faserverbundmaterial (22) aufgebauten Innenbehälters (2) eine zusammenhängende Diffusionssperrschicht (23) vorgesehen ist, die unter Druckbelastung an der Innenwand des Innenbehälters (2) anliegt, jedoch gegenüber dieser verschiebbar ist.

5. Druckbehälter nach Anspruch 4,
**dadurch gekennzeichnet, dass** die Diffusionssperrschicht (23) durch eine mit einem geeigneten Sperrmaterial (23b) beschichtete Trägerschicht (23a) gebildet ist.
